# EUROPEAN PATENT APPLICATION

(11) **EP 2 687 965 A1**
(43) Date of publication of application: **22.01.2014**
(21) Application number: 12757848.2
(22) Date of filing: 13.03.2012
(51) Int. Cl.: G06F 3/048

(54) **ICON GENERATION METHOD**

(30) Priority: 14.03.2011 CN 201110060343
(71) Applicant: Xiaomi Inc., Beijing 100085 (CN)
(72) Inventor: LI, Weixing, Beijing 100085 (CN); REN, Tian, Beijing 100085 (CN); LI, Wanqiang, Beijing 100085 (CN); HUANG, Jiangji, Beijing 100085 (CN)
(74) Representative: Spachmann, Holger
(86) International application number: PCT/CN2012/072283
(87) International publication number: WO 2012/122933

(57) **Abstract**

The invention relates to a method for icon generation, comprising the following steps: adjusting an original icon to a preset size under the same resolution environment; making statistics of the color value of every pixel for the original icon, and calculate the dominant hue of the original icon; generating a background color according to a dominant hue's hue angle, preset color saturation and brightness; generating icon baseplate by applying the background color to the preset color gradient template; cutting the adjusted icon using the preset icon edge cutting template; overlapping the icon baseplate, the cut icon and a preset icon foreground template to generate a final icon.

With this technical scheme of the present disclosure, new icons are compliable with a unified pattern of a third party's system, and guarantee proportionality of the new icons to the system.

## Description

### Field of the Invention

The present invention relates to a technology of terminal user interface, and more particularly, to a method for icon generation.

### Background Information

Most operating systems for computers or smart phones support various applications developed by third parties, and also allow the applications to be used in these systems. Therefore, such operating systems must provide a solution enabling the users to identify the applications of third parties.

In almost all operating systems with graphical interfaces, third party applications are supported to be marked by specific pictures (i.e.: icons), which are generally provided by the developer of the third party applications.

As the icons for third party applications are provided by various developers, the icon styles are inconsistent, so the list of program icons in the operating system is disorderly, reducing the users' experience.

Currently, limited picture resources are built-into the operating systems. In tune with each third party application, some pictures are selected randomly, and merged with the program icon in a certain way in order to generate new icons, realizing the consistency of global icon patterns.

Yet, the picture resources selected randomly by the operating systems do not relate to icon contents of the third party applications, so the merged icons are not aesthet-cally pleasing, and the finally generated icons do not provide any predictability for the developer of the third party applications.

### Summary of the Invention

According to the invention a method for icon generation is provided, wherein new icons complying with a unified pattern of a system can be generated and wherein a proportionality of the new icons is guaranteed.

To this end, the present disclosure adopts the following technical scheme:
A method for icon generation, comprising the following steps:
   A. adjusting an original icon to a preset size under the same resolution environment as the original icon;
   B. making statistics of the color value of every pixel for the original icon, and calculate a dominant hue of the original icon;
   C. generating a background color according to the dominant hue's hue angle, preset color saturation and brightness;
   D. generating an icon baseplate by applying said background color to a preset color gradient template;
   E. cutting the adjusted icon using a preset icon edge cutting template;
   F. overlapping the icon baseplate, the cut icon and a preset icon foreground template to generate final icon.

The aforementioned Step B can favorably comprise the following steps:
obtaining RGB value of each pixel for the original icon;
obtaining average R value by averaging the R value of all pixels for the original icon; obtaining average G value by averaging the G value of all pixels for the original icon; obtaining average B value by averaging the B value of all pixels for the original icon; the average R, average G and average B refer to the dominant hue of the original icon.

With this technical scheme of the present disclosure, the contents of the icons in the third party application can be analyzed; and based on the main contents of the original icons, new icons complying with the unified pattern of the system could be generated to guarantee a proportionality of the new icons themselves, realizing the consistency of global icon patterns. Also, a single icon can be aesthetically pleasing while the original semantics are maintained.

### Description of the drawings

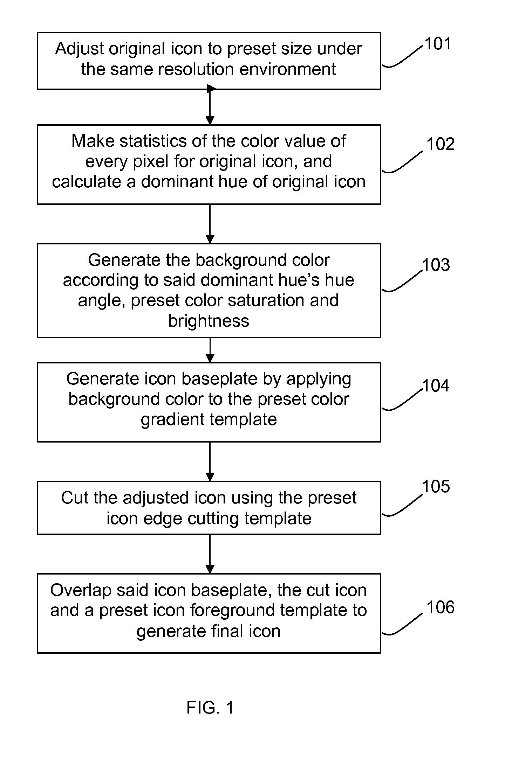

Figure 1 illustrates a flowchart of a method for an icon generation according to an exemplary embodiment of the present disclosure.

### Detailed Description of the preferred embodiments

Reference will now be made in detail to an exemplary embodiment, which is illustrated in the accompanying drawing.

Figure 1 illustrates a flowchart of a method for an icon generation according to an exemplary embodiment of the present disclosure.

Referring to FIG. 1, the method for icon generation comprising the following steps:
Step101: Adjusting an original icon to a preset size under the same resolution environment as the original icon.

Step102. Making statistics of the color value of every pixel for the original icon, and calculate a dominant hue of the original icon. Firstly, obtaining the RGB value of each pixel for the original icon; obtaining an average R value by averaging the R value of all pixels for the original icon; obtaining an average G value by averaging the G value of all pixels for the original icon; obtaining an average B value by averaging the B value of all pixels for the original icon; the average R value, average G value and average B value refer to the dominant hue of the original icon.

Step103: Generating the background color according to the dominant hue's hue angle, preset color saturation and brightness.

Step104: Generating an icon baseplate by applying background color to the preset color gradient template.

Step 105: Cutting the adjusted icon of Step 101 using a preset icon edge cutting template.

Step106: Overlapping the icon baseplate, the cut icon of Step 105 and a preset icon foreground template to generate final icon.

The above is a detailed description of the technical features of the present disclosure based on a typical preferred embodiment. However, it should be appreciated that the present disclosure is capable of a variety of embodiments and various modifications by those skilled in the art, and all such variations or changes shall be embraced within the scope of the following claims.

## Claims

1. A method for icon generation, comprising the following steps:
A. adjusting an original icon to a preset size under the same resolution environment;
B. making statistics of the color value of every pixel for the original icon, and calculate a dominant hue of the original icon;
C. generating a background color according to the dominant hue's hue angle, preset color saturation and brightness;
D. generating an icon baseplate by applying said background color to a preset color gradient template;
E. cutting the adjusted icon using a preset icon edge cutting template;
F. overlapping the icon baseplate, the cut icon and a preset icon foreground template to generate a final icon.

2. The method of claim 1, wherein step B comprises the following steps:
obtaining RGB value of each pixel for the original icon;
obtaining average R value by averaging the R value of all pixels for the original icon;
obtaining average G value by averaging the G value of all pixels for the original icon;
obtaining average B value by averaging the B value of all pixels for the original icon;
the average R, average G and average B refer to the dominant hue of the original icon.
